# EUROPEAN PATENT APPLICATION

(11) **EP 4 640 637 A1**
(43) Date of publication of application: **29.10.2025**
(21) Application number: 25172189.0
(22) Date of filing: 24.04.2025
(51) Int. Cl.: C01G 53/05, C01G 53/42, C01G 53/506, H01M 4/00

(54) **PREPARATION METHOD OF POSITIVE ELECTRODE ACTIVE MATERIAL**

(30) Priority: 25.04.2024 KR 20240055654
(71) Applicant: SAMSUNG SDI CO., LTD., Yongin-si, Gyeonggi-do 17084 (KR)
(72) Inventor: CHOI, Seungyeon, 17084 Yongin-si (KR); KIM, Soohyeon, 17084 Yongin-si (KR); SHIN, Dongwook, 17084 Yongin-si (KR); HONG, Soonkie, 17084 Yongin-si (KR); HA, Jeuk, 17084 Yongin-si (KR); CHA, Minah, 17084 Yongin-si (KR); KIM, Minhan, 17084 Yongin-si (KR); LEE, Soonrewl, 17084 Yongin-si (KR)
(74) Representative: Marks & Clerk LLP

(57) **Abstract**

A method of preparing a positive electrode active material includes: performing a coprecipitation reaction including a first step of reacting at a pH range of about pH 11 to about pH 12 and a second step of reacting at a pH lower than the first step for a mixture of a nickel precursor and a metal precursor to obtain a nickel-based composite hydroxide, mixing the nickel-based composite hydroxide, an anhydrous lithium hydroxide, an aluminium raw material, and a zirconium raw material and subjecting to a first heat treatment to produce hollow secondary particles, pulverizing the secondary particles, and adding and mixing the pulverized resultant, a cobalt coating raw material, and a zirconium coating raw material into an aqueous solvent, and then performing a second heat treatment to obtain a positive electrode active material.

## Description

### BACKGROUND

### 1. Field

The present invention relates to a method of preparing a positive electrode active material.

### 2. Description of the Related Art

A portable information device, such as a cell phone, a laptop, a smart phone, and/or the like, or an electric vehicle utilizes a rechargeable lithium battery having high energy density and easy portability as a driving power source. Research has been conducted to utilize a rechargeable lithium battery having high energy density as a driving power source and/or a power storage power source for hybrid or electric vehicles.

In order to implement a rechargeable lithium battery suitable for these purposes, one or more positive electrode active materials have been considered. Among them, lithium nickel-based oxide, lithium nickel-manganese-cobalt composite oxide, lithium nickel-cobalt-aluminium composite oxide, and lithium cobalt oxide are mainly or predominantly used as positive electrode active materials.

However, as the demand for large size, high capacity, high energy density, and/or improved or enhanced productivity for rechargeable lithium batteries has increased, it is desirable to develop a method of preparing suitable positive electrode active materials.

### SUMMARY

The present invention is directed toward a method of preparing a positive electrode active material including core particles in the form of single particles effectively or suitably at a relatively low firing temperature without using an alkaline grain growth accelerator.

The present invention is directed toward a method that reduces agglomeration of particles and makes the overall preparing process simple and economical.

In a first aspect the present invention provides a method of preparing a positive electrode active material, which includes performing a co-precipitation reaction including a first step of reacting at a pH range of about pH 11 to about pH 12 and a second step of reacting at a pH lower than the first step for a mixture of a nickel precursor and a metal precursor to obtain a nickel-based composite hydroxide having an average particle diameter of about 10 µm to about 20 µm, mixing the nickel-based composite hydroxide, an anhydrous lithium hydroxide, an aluminium raw material, and a zirconium raw material and subjecting to a first heat treatment to produce hollow secondary particles including layered lithium nickel-based composite oxide and having pores inside as secondary particles made by agglomerating a plurality of primary particles, pulverizing the secondary particles, and adding and mixing the pulverized resultant (e.g., the pulverized secondary particles), a cobalt coating raw material, and a zirconium coating raw material into an aqueous (e.g., water-soluble) solvent, and then performing a second heat treatment to obtain a positive electrode active material.

The method of preparing a positive electrode active material according to one or more embodiments may effectively (e.g., in terms of processing or economics) prepare a positive electrode active material including core particles in the form of single particles at a relatively low firing temperature without using a grain growth accelerator, and may reduce agglomeration of particles (e.g., a degree or occurrence of agglomeration of particles), and may prepare a positive electrode active material that is structurally stable, has no or substantially no residual impurities, does not increase resistance (e.g., electrical resistance) (or a degree of occurrence of resistance (e.g., electrical resistance) is reduced), and may have a long cycle-life, while reducing agglomeration of particles (e.g., reducing a degree of occurrence of agglomeration of particles) and making the overall preparing process simple and economical.

At least some of the above and other features of the invention are set out in the claims.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIGS. 1-4 are views schematically illustrating a rechargeable lithium battery according to one or more embodiments.
FIG. 5 is an image of a cross-section of the hollow secondary particles prepared in Example 1 taken using a scanning electron microscope (SEM).
FIG. 6 is an SEM image of a cross-section of small secondary particles prepared in Comparative Example 3.
FIG. 7 is an SEM image of a cross-section of the secondary particles prepared in Comparative Example 4.
FIG. 8 is a graph illustrating the cycle-life characteristics of rechargeable lithium battery cells manufactured in Examples 1 and 2 and Comparative Examples 1 to 4.
FIG. 9 is a photograph illustrating the results of a loading amount test for the positive electrode active material prepared according to Example 1.
FIG. 10 is a photograph illustrating the results of a loading amount test for the positive electrode active material prepared according to Comparative Example 3.
FIG. 11 is a photograph illustrating the results of a loading amount test for the positive electrode active material prepared according to Comparative Example 4.

### DETAILED DESCRIPTION

Hereinafter, embodiments of the present disclosure will be described in more detail. However, these embodiments are examples, the present disclosure is not limited thereto, and the present disclosure is defined by the scope of the appended claims and equivalents thereof.

As utilized herein, the singular forms "a," "an," and "the" are intended to include the plural forms as well, unless the context clearly indicates otherwise. Further, the utilization of "may" when describing embodiments of the present disclosure refers to "one or more embodiments of the present disclosure."

In the context of the present disclosure and unless otherwise defined, the terms "use," "using," and "used" may be considered synonymous with the terms "utilize," "utilizing," and "utilized," respectively.

As utilized herein, the term "about" or similar terms are used as terms of approximation and not as terms of degree, and are intended to account for the inherent deviations in measured or calculated values that would be recognized by those of ordinary skill in the art. "About" or "approximately," as used herein, is also inclusive of the stated value and refers to within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ±30%, ±20%, ±10%, or ±5% of the stated value.

Any numerical range recited herein is intended to include all sub-ranges of substantially the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

As used herein, if (e.g., when) specific definition is not otherwise provided, it will be understood that if (e.g., when) an element, such as a layer, a film, a region, a substrate, and/or the like, is referred to as being "on" another element, it may be directly on the other element or intervening elements may also be present. In contrast, if (e.g., when) an element is referred to as being "directly on" another element, there may be no intervening elements present.

As used herein, if (e.g., when) specific definition is not otherwise provided, the singular may also include the plural. In one or more embodiments, unless otherwise specified, "A or B" may refer to "including A, including B, or including A and B."

As used herein, "combination thereof" may refer to a mixture, a stack, a composite, a copolymer, an alloy, a blend, a reaction product of constituents, and/or reaction product of reactants.

As used herein, if (e.g., when) a definition is not otherwise provided, a particle diameter may be an average particle diameter. This average particle diameter refers to an average particle diameter (D₅₀), which is a diameter of particles with a cumulative volume of 50 volume% in the particle size distribution. The average particle diameter (D₅₀) may be measured by methods generally used by or generally available to those skilled in the art, for example, by measuring with a particle size analyzer and/or a transmission electron microscope (TEM) and/or a scanning electron microscope (SEM). In one or more embodiments, a dynamic light-scattering (DLS) measurement device may be used to perform a data analysis, and the number of particles may be counted for each particle size range. From this information, the average particle diameter (D₅₀) value may be obtained through a calculation. A laser diffraction method may also be used. If (e.g., when) measuring by laser diffraction, for example, the particles to be measured may be dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the average particle diameter (D₅₀) based on 50 volume% of the particle size distribution in the measuring device may be calculated.

Herein, it should be understood that terms, such as "comprises," "includes," or "have," are intended to designate the presence of an embodied feature, number, step, element, or a combination thereof, but it does not preclude the possibility of the presence or addition of one or more other features, number, step, element, or a combination thereof.

"Metal" is interpreted as a concept including ordinary metals, transition metals, and metalloids (semi-metals).

### Preparation Method of Positive Electrode Active Material

A method of preparing a positive electrode active material includes (i) performing a co-precipitation reaction including a first step of reacting at a pH range of about pH 11 to about pH 12 and a second step of reacting at a pH lower than the first step for a mixture of a nickel precursor and a metal precursor to obtain a nickel-based composite hydroxide having an average particle diameter of about 10 µm to about 20 µm, (ii) mixing the nickel-based composite hydroxide, an anhydrous lithium hydroxide, an aluminium raw material, and a zirconium raw material and subjecting to a first heat treatment to produce hollow secondary particles including layered lithium nickel-based composite oxide and having pores inside as secondary particles made by agglomerating a plurality of primary particles, (iii) pulverizing the secondary particles, and (iv) adding and mixing the pulverized resultant (e.g., the pulverized secondary particles), a cobalt coating raw material, and a zirconium coating raw material into an aqueous (e.g., water-soluble) solvent, and then performing a second heat treatment to obtain a positive electrode active material.

A high-nickel-based positive electrode active material having a nickel content (e.g., amount) of about 60 mol% or more has been developed because it may achieve high energy density, but is limited by one or more problems, such as structural deterioration due to charging and discharging, surface side reactions with electrolyte, and deterioration due to particle cracking.

As a high-nickel-based positive electrode active material may achieve or provide high capacity, the secondary particle form made by agglomerating a plurality of primary particles has been mainly or predominantly used, but it is still desirable to utilize the single particle form in order to achieve long cycle-life and reduce gas generation. However, by increasing the firing temperature to produce single particles, problems may arise, such as increased agglomeration of particles and decreased productivity. In order to eliminate or reduce agglomeration of particles (e.g., a degree or occurrence of agglomeration of particles) and lower the firing temperature, research has been focused on adding an alkaline grain growth accelerator during the synthesis of single particles, but there is a problem in that the remaining grain growth accelerator after firing may act as a resistance (e.g., electrical resistance) within the positive electrode, causing a decrease in cycle-life. If (e.g., when) a washing process is performed to remove or reduce the residual grain growth accelerator or residual salts, preparation costs may increase, and the process may be complicated.

Accordingly, in one or more embodiments, the present invention provides a method of preparing a positive electrode active material that may be effectively synthesized even by heat treatment at a relatively low temperature, may be economical and advantageous or beneficial with respect to mass production, and may realize or provide excellent or suitable cycle-life characteristics due to high structural stability.

According to the preparation method as described in one or more embodiments of the present invention, a high nickel-based positive electrode active material may be prepared effectively or suitably in the form of single particles in a simple method at a relatively low firing temperature without adding an alkaline grain growth accelerator, thereby improving or enhancing productivity and economic efficiency.

In the method of preparing a positive electrode active material according to one or more embodiments, when the nickel-based composite hydroxide and the anhydrous lithium hydroxide are mixed and the first heat treatment is performed, an aluminium raw material and a zirconium raw material are added together and fired. At this time, it is understood that the aluminium raw material and the zirconium raw material may act as a dopant and, at the same time, may act as a grain growth accelerator. When aluminium raw material and zirconium raw material are added, this addition may promote or enhance grain growth, effectively or suitably synthesizing single particles at a lower temperature than the single particle synthesis method that is generally used or generally available. Accordingly, during the preparing process, agglomeration of particles (e.g., a degree or occurrence of agglomeration or particles) may be suppressed or reduced, and productivity may be improved or enhanced. Alkaline particle growth accelerators or fluxes that are generally used or generally available have the problem with remaining (e.g., undesirable impurities) after firing, which acts as resistance (e.g., electrical resistance) within the positive electrode, thereby reducing the cycle-life. However, by using the aluminium raw material and the zirconium raw material as dopants for the positive electrode active material, the cycle-life characteristics may be improved or enhanced.

Hereinafter, embodiments of the method of preparing the positive electrode active material will be described in more detail.

(i) First, by performing a co-precipitation reaction including a first step of reacting a mixture of a nickel precursor and a metal precursor at a pH range of about pH 11 to about pH 12 and a second step of reacting at a pH lower than the first step, a nickel-based composite hydroxide having an average particle diameter of about 10 µm to about 20 µm is prepared.

The nickel-based composite hydroxide is a precursor of core particles in a positive electrode active material and is synthesized through a co-precipitation reaction. In the co-precipitation reaction, the nickel precursor may be a hydroxide, an oxide, a nitrate, a sulfate, a carbonate, or a combination thereof of nickel. The metal precursor may be a hydroxide, an oxide, a nitrate, a sulfate, a carbonate, or a combination thereof containing metal. Herein, the metal of the metal precursor may be boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), tin (Sn), strontium (Sr), titanium (Ti), vanadium (V), tungsten (W), yttrium (Y), zinc (Zn), or a combination thereof.

In one or more embodiments, in the co-precipitation reaction, in addition to the nickel precursor and/or the metal precursor, a complexing agent and/or a pH adjuster may be used. The complexing agent may play a role in controlling or adjusting a reaction rate of precipitate formation in the co-precipitation reaction and may include, for example, ammonium hydroxide (NH₄OH), citric acid, and/or a combination thereof. A concentration of the complexing agent may be about 0.1 M to about 1.5 M, for example, about 0.1 M to about 1.4 M or about 0.5 M to about 1.4 M. The pH adjuster may serve to control or adjust the pH of the reactant and may include, for example, sodium hydroxide (NaOH), sodium carbonate (Na₂CO₃), sodium oxalate (Na₂C₂O₄), and/or a combination thereof.

The co-precipitation reaction includes a first step of reacting at a pH range of about 11 to about 12 and a second step of reacting at a pH lower than the first step. The pH of the first step may be, for example, about 11.5 to about 12, about 11.6 to about 11.9, or about 11.7 to about 11.8, and may be considered a kind or type of pore formation step. The second step is a step of reacting at a pH lower than that of the first step and may be a kind or type of particle growth step. By changing the pH in two or more steps, the synthesis rate may be changed, and as a result, a nickel-based composite hydroxide with micropores inside the particles is obtained. The pH of the second step may be, for example, about 10 to about 11.9, about 10.5 to about 11.7, about 11 to about 11.7, about 11.2 to about 11.6, or about 11.3 to about 11.6. A difference between the pH of the first step and the pH of the second step may be, for example, about 0.1 to about 1.5, for example, about 0.1 to about 1.0, about 0.1 to about 0.8, about 0.1 to about 0.6, about 0.1 to about 0.5, about 0.1 to about 0.3, or about 0.1 to about 0.2.

As an example, the first step may be performed for about 4 hours to about 20 hours, about 6 hours to about 12 hours, or about 8 to about 10 hours. The second step may be performed for about 10 hours to about 30 hours, about 10 hours to about 20 hours, about 15 hours to about 25 hours, or about 18 hours to about 24 hours.

For example, the nickel-based composite hydroxide may be represented by Chemical Formula 1:

### Chemical Formula 1

Niₓ₁M¹_{y1}(OH)₂

In Chemical Formula 1, 0.6≤x1≤1, 0≤y1≤0.4, 0.9≤x1+y1≤1.1, and M¹ may be one or more elements selected from among B, Ba, Ca, Ce, Co, Cr, Cu, Fe, Mg, Mn, Mo, Nb, Si, Sn, Sr, Ti, V, W, Y, and Zn.

In Chemical Formula 1, 0.7≤x1≤1 and 0<y1≤0.3, or 0.8≤x1≤1 and 0≤y1≤0.2, or 0.9≤x1<1 and 0<y1≤0.1.

For example, the nickel-based composite hydroxide may be represented by Chemical Formula 2:

### Chemical Formula 2

Niₓ₂Coᵥ₂M²_{y2}(OH)₂

In Chemical Formula 2, 0.6≤x2<1, 0<v2≤0.4, 0≤y2≤0.4, and 0.9≤x2+v2+y2≤1.1, and M² may be one or more elements selected from among B, Ba, Ca, Ce, Cr, Cu, Fe, Mg, Mn, Mo, Nb, Si, Sn, Sr, Ti, V, W, Y, and Zn.

For example, in the nickel-based composite hydroxide, the nickel content (e.g., amount) may be greater than or equal to about 60 mol%, greater than or equal to about 65 mol%, greater than or equal to about 70 mol%, greater than or equal to about 75 mol%, greater than or equal to about 80 mol%, greater than or equal to about 85 mol%, greater than or equal to about 90 mol%, greater than or equal to about 91 mol%, or greater than or equal to about 94 mol%, and less than or equal to about 99 mol%, or less than or equal to about 98 mol% based on 100 mol% of a total metal excluding lithium.

The nickel-based composite hydroxide may be in the form of particles. For example, the particles may include an internal portion including a large number of fine pores and/or an outer portion that surrounds the internal portion and has a dense structure. Here, the internal portion of the nickel-based composite hydroxide particle may refer to a region of 50 volume% to 70 volume%, for example, 60 volume%, from the center of the total volume of the particle, or may refer to a remaining region excluding the external portion, which may be a region within 3 µm from the outermost surface among the total distance from the center to the surface of the particle.

In this way, by using a nickel-based composite hydroxide having micropores inside the particles, a positive electrode active material in the form of hollow secondary particles may be effectively or suitably obtained. In this case, the secondary particles may be easily pulverized during the pulverizing process to obtain single particles.

The average particle diameter (D₅₀) of the nickel-based composite hydroxide may be about 10 µm to about 20 µm, for example, about 10 µm to about 18 µm or about 12 µm to about 16 µm. Here, the average particle diameter (D₅₀) may be measured utilizing SEM images. The nickel-based composite hydroxide may be a large particle, for example, a large particle precursor.

For example, the nickel-based composite hydroxide may be amorphous (e.g., non-crystalline), which may be confirmed through X-ray diffraction analysis.

Next, (ii) the nickel-based composite hydroxide, an anhydrous lithium hydroxide, an aluminium raw material, and a zirconium raw material are mixed and subjected to a first heat treatment. Through this, hollow secondary particles that include layered lithium nickel-based composite oxide, that are provided by agglomerating a plurality of primary particles, and that have pores inside are prepared.

As an example, in the process (ii) above, a lithium content (e.g., amount) of the anhydrous lithium hydroxide may be about 0.9 parts by mole to about 1.2 parts by mole, for example, about 0.9 parts by mole to about 1.1 parts by mole, or about 0.9 parts by mole to about 1.05 parts by mole, for example, greater than about 1 part by mole and less than about 1.1 parts by mole, for example, about 1.01 parts by mole to about 1.04 parts by mole based on 1 part by mole of the total metal of the nickel-based composite hydroxide, aluminium of the aluminium raw material, and zirconium of the zirconium raw material. By appropriately or suitably controlling or adjusting the molar ratio of lithium raw materials, core particles in the form of single particles having a stable structure and good or suitable quality may be effectively or suitably prepared.

In process (ii) above, the anhydrous lithium hydroxide may be used as a lithium raw material. By using the anhydrous lithium hydroxide as a lithium raw material, the loading amount may be increased, contributing to the improvement or enhancement of production per hour.

For example, the anhydrous lithium hydroxide (LiOH) may be prepared by drying hydrated lithium hydroxide (LiOH · H₂O) having an average particle diameter (D₅₀) of about 400 µm to about 600 µm and pulverizing it into an average particle diameter (D₅₀) of about 3 µm to about 30 µm. The anhydrous lithium hydroxide may not be pulverized before the drying but just once pulverized for about 1 minute after the drying. The drying may be, for example, performed under a vacuum condition within a temperature range of about 50 °C to about 200 °C for about 0.5 hours to about 20 hours.

The method of preparing the anhydrous lithium hydroxide may allow for the easy production of an anhydrous lithium salt, the maintenance of optimal or suitable process conditions, and a reduced conversion rate to Li₂CO₃ to about 5% or less, resulting in obtaining a high-purity anhydrous lithium hydroxide. After pulverizing the anhydrous lithium hydroxide, because of a rapid decrease of fluidity of the powder, it may be difficult to perform an additional process. For example, if (e.g., when) drying is performed after the pulverizing, the fine particles may be entangled each other and tightly agglomerated by heat that is generated during the drying, which may need a re-pulverizing process, but the agglomerated particles may be more difficult to grind due to their high agglomeration strength in the re-pulverizing process. In one or more embodiments, as the number of processes increases, the conversion rate to Li₂CO₃ may also increase due to an increase in the specific surface area, failing to obtain high-quality anhydrous lithium hydroxide. However, the method of preparing anhydrous lithium hydroxide according to one or more embodiments, in which the anhydrous lithium hydroxide is once pulverized into a specific size under a set or predetermined condition after the drying, may be a simple process of obtaining high-quality anhydrous lithium hydroxide, and in one or more embodiments, additional processes may be easily or suitably added thereto.

By using anhydrous lithium hydroxide instead of hydrated lithium hydroxide as a lithium raw material, the amount of unnecessary or undesirable gas and moisture generated during the first heat treatment may be reduced, thereby improving or enhancing processability and enhancing the quality of the positive electrode active material. In one or more embodiments, there may be no input of unnecessary or undesirable heavy substances, such as H₂O and/or the like, increasing a heat treatment yield and improving or enhancing productivity.

The average particle diameter (D₅₀) of the hydrated lithium hydroxide, which is a starting material, may be, for example, about 450 µm to about 550 µm or about 480 µm to about 500 µm, but the obtained anhydrous lithium hydroxide may have an average particle diameter (D₅₀) of about 3 µm to about 25 µm or about 5 µm to about 20 µm.

In one or more embodiments, based on 100 mol% of a total metal of the nickel-based composite hydroxide, aluminium of the aluminium raw material, and zirconium of the zirconium raw material, an aluminium content (e.g., amount) of the aluminium raw material may be about 0.8 mol% to about 1.5 mol%, for example, about 0.8 mol% to about 1.4 mol%, about 0.8 mol% to about 1.3 mol%, or about 0.9 mol% to about 1.2 mol%.

For example, based on 100 mol% of a total metal of the nickel-based composite hydroxide, aluminium of the aluminium raw material, and zirconium of the zirconium raw material, a zirconium content (e.g., amount) of the zirconium raw material may be about 0.1 mol% to about 0.3 mol%, for example, about 0.1 mol% to about 0.2 mol%.

In one or more embodiments, the ratio (Al/Zr) of the aluminium content (e.g., amount) to the zirconium content (e.g., amount) may be greater than or equal to about 5, for example, about 5 to about 20, about 5 to about 15, or about 5 to about 10. Here, the ratio of the aluminium content (e.g., amount) to the zirconium content (e.g., amount) may be a molar ratio.

It should be understood that the aluminium raw material and the zirconium raw material according to one or more embodiments may act as raw materials for dopants and, at the same time, play the role of grain growth accelerators, and by adding each in the above content (e.g., amount) ranges, single particles in an optimal or suitable state may be obtained in the form of core particles.

The aluminium raw material may be aluminium oxide, for example, Al₂O₃. In one or more embodiments, the zirconium raw material may be zirconium oxide, for example, ZrO₂.

The method of preparing a positive electrode active material according to one or more embodiments may enable heat treatment (e.g., first heat treatment) at a lower temperature than the single particle synthesis method that is generally used or generally available. For example, even if heat treatment is performed at a relatively low temperature, it may allow for obtaining desired good single particles as the core particle of the positive electrode active material. Accordingly, the process may become simpler, economic efficiency may be improved or enhanced, particle agglomeration problems may be reduced, and productivity and processability may be improved or enhanced.

The first heat treatment may be performed at a temperature of, for example, less than or equal to about 900 °C, less than or equal to about 890 °C, less than or equal to about 850 °C, or less than or equal to about 810 °C, for example, about 700 °C to about 900 °C, about 710 °C to about 890 °C, about 730 °C to about 850 °C, or about 750 °C to about 810 °C.

The first heat treatment may be performed in an oxidizing gas atmosphere, and air or oxygen may be used as the oxidizing gas. For example, the second heat treatment may be performed in an air atmosphere or an atmosphere including greater than or equal to about 50 volume%, for example, about 60 volume% to about 99 volume%, about 70 volume% to about 98 volume%, or about 90 volume% to about 95 volume% of oxygen.

The first heat treatment may be performed in the above-described temperature ranges for, for example, about 4 hours to about 20 hours, about 5 hours to about 15 hours, or about 6 hours to about 12 hours.

In the method of preparing a positive electrode active material according to one or more embodiments, an alkaline grain growth accelerator or flux may not be added during the process of mixing the nickel-based composite hydroxide, the lithium raw material, the aluminium raw material, and the zirconium raw material and performing the first heat treatment. Accordingly, resistance (e.g., electrical resistance) increase due to residue (e.g., undesirable impurities) after heat treatment may be prevented or reduced, the cycle-life characteristics of a rechargeable lithium battery may be improved or enhanced, and the process and economy may be improved or enhanced without adding a process for removing residue.

Through the first heat treatment, hollow secondary particles including layered lithium nickel-based composite oxide are obtained. At this time, the plurality of primary particles constituting the secondary particles may be sufficiently or suitably grown into single crystals by adding an aluminium raw material and/or a zirconium raw material, and the secondary particles have a hollow structure having internal pores, and thus they may be easily or suitably pulverized in the subsequent pulverization step.

In one or more embodiments, the secondary particles may be large particles, and by using the precursors of these large particles to proceed with the process to be further described herein, the hardness of the cake produced during the preparing process may be low, making it easy to pulverize, and improving or enhancing productivity per hour. For example, the average particle diameter (D₅₀) of the secondary particles may be about 10 µm to about 20 µm, for example, about 10 µm to about 18 µm or about 12 µm to about 16 µm. The average particle diameter (D₅₀) of secondary particles may be measured utilizing SEM images.

The average particle diameter (D₅₀) of the plurality of primary particles constituting the secondary particles may be about 1 µm to about 4 µm, for example, about 1.5 µm to about 4 µm, about 2 µm to about 4 µm, or about 2.5 µm to about 3.8 µm. The average particle diameter (D₅₀) of the plurality of primary particles may be measured utilizing SEM images of the surfaces of the secondary particles.

The average size of the internal pores inside the secondary particles may be about 1 µm to about 9 µm, for example, about 2 µm to about 8 µm or about 3 µm to about 7 µm. The average size of the pores inside the secondary particle may be measured from an SEM image of the cross-section of the secondary particle, and may refer to the major-axis length of the pore.

The obtained layered lithium nickel-based composite oxide may be represented by Chemical Formula 11, which will be further described herein.

Then, (iii) the obtained secondary particles are pulverized. In process (iii) above, pulverization of secondary particles refers to breaking the secondary particles and may be understood as a process in which the plurality of primary particles forming the secondary particles are separated from each other to become single particles. Through the pulverizing process, core particles of the positive electrode active material in the form of single particles are obtained.

According to the above preparation method, when nickel-based composite hydroxide and lithium raw materials are mixed and heat treated, the aluminium raw material and the zirconium raw material are added together and heat treated, so that the plurality of primary particles may be single particles of sufficient or suitable size at a relatively low temperature of 900 °C or lower. Through the above-described process, secondary particles in which the plurality of primary particles are agglomerated are obtained, and by pulverizing them, the desired or suitable single particle form as the core particle of the positive electrode active material may be obtained.

According to the above preparation method, by using a nickel-based composite hydroxide having micropores provided inside as a precursor, a lithium nickel-based composite oxide in the form of hollow secondary particles is obtained after heat treatment, and accordingly, single particles may be prepared by pulverizing the secondary particles in an easy or suitable manner.

The pulverizing may be carried out using a jet mill and/or air flow classifying mill (ACM) equipment. If (e.g., when) pulverizing is performed with a jet mill, the air pressure may be appropriately or suitably adjusted so that the bulk density of the pulverized product may be about 0.2 g/cm³ to 0.5 g/cm³, and may be, for example, adjusted to be about 2 bar to about 8 bar or about 4 bar to about 6 bar. The above pulverizing process may be carried out for, for example, about 10 minutes to about 120 minutes, for example, about 10 minutes to about 80 minutes, about 10 minutes to about 60 minutes, or about 20 minutes to about 50 minutes.

Thereafter, (iv) the pulverized resultant (e.g., the pulverized secondary particles), the cobalt coating raw material, and the zirconium coating raw material are added and mixed in an aqueous (e.g., water-soluble) solvent and then subjected to a second heat treatment to obtain a positive electrode active material. The cobalt coating raw material may be a hydroxide, an oxide, a nitrate, a sulfate, a carbonate, or a combination thereof including cobalt. The zirconium coating raw material may be a hydroxide, an oxide, a nitrate, a sulfate, a carbonate, or a combination thereof including zirconium.

As an example, the aqueous (e.g., water-soluble) solvent may be a generally used or generally available solvent, and may include, for example, water, distilled water, an alcohol-based solvent, and/or a combination thereof.

For example, the second heat treatment may be performed in an oxidizing gas atmosphere, and air or oxygen may be used as the oxidizing gas. For example, the second heat treatment may be performed in an air atmosphere or an atmosphere including greater than or equal to about 50 volume%, about 60 volume% to about 99 volume%, about 70 volume% to about 98 volume%, or about 90 volume% to about 95 volume% of oxygen.

In one or more embodiments, the second heat treatment may be performed at about 500 °C to about 900 °C, or about 600 °C to about 800 °C, or about 650 °C to about 750 °C. The second heat treatment may be performed in an oxidizing gas atmosphere, for example, for about 10 hours to about 20 hours, about 14 hours to about 19 hours, or about 15 hours to about 18 hours. If (e.g., when) this secondary heat treatment condition is satisfied, a positive electrode active material having better or more suitable surface stability and improved or enhanced cycle-life characteristics may be effectively or suitably prepared.

In the method of preparing the positive electrode active material according to one or more embodiments, based on 100 mol% of a total metal of the nickel-based composite hydroxide, aluminium of the aluminium raw material, zirconium of the zirconium raw material, cobalt of the cobalt coating raw material, and zirconium of the zirconium coating raw material, a cobalt content (e.g., amount) of the cobalt coating raw material may be adjusted to about 0.5 mol% to about 5 mol%, for example, about 0.7 mol% to about 4 mol%, about 0.8 mol% to about 3 mol%, or about 1 mol% to about 2 mol%. Within the above ranges, the coating layer may effectively or suitably play a role in improving or enhancing cycle-life characteristics without acting as resistance (e.g., electrical resistance) or reducing capacity (e.g., electrical capacity).

In the method of preparing the positive electrode active material according to one or more embodiments, based on 100 mol% of a total metal of the nickel-based composite hydroxide, aluminium of the aluminium raw material, zirconium of the zirconium raw material, cobalt of the cobalt coating raw material, and zirconium of the zirconium coating raw material, a zirconium content (e.g., amount) of the zirconium coating raw material may be adjusted to about 0.1 mol% to about 3 mol%, for example, about 0.2 mol% to about 2 mol%, or about 0.3 mol% to about 1 mol%. Within the above ranges, cycle-life characteristics may be effectively or suitably improved or enhanced without the coating layer acting as resistance (e.g., electrical resistance).

In one or more embodiments, the positive electrode active material may include a layered lithium nickel-based composite oxide and/or core particles in the form of single particles; a coating layer provided on the surface of the core particle and including cobalt and/or zirconium.

It may be synthesized even through relatively low-temperature heat treatment, and in order to realize excellent or suitable cycle-life characteristics, the positive electrode active material may include layered lithium nickel-based composite oxide as core particles.

For example, the lithium nickel-based composite oxide of the core particle may be a high nickel-based oxide having a nickel content (e.g., amount) of greater than or equal to about 60 mol% based on 100 mol% of a total metal excluding lithium. The nickel content (e.g., amount) of the layered lithium nickel-based composite oxide may be, for example, greater than or equal to about 65 mol%, greater than or equal to about 70 mol%, greater than or equal to about 75 mol%, greater than or equal to about 80 mol%, greater than or equal to about 85 mol%, greater than or equal to about 90 mol%, greater than or equal to about 91 mol%, greater than or equal to about or 94 mol% and less than or equal to about 99 mol% or less than or equal to about 98 mol% based on 100 mol% of a total metal excluding lithium.

The lithium nickel-based composite oxide of the core particle includes aluminium and/or zirconium as a kind or type of dopant in a set or specific amount in addition to nickel. In the lithium nickel-based composite oxide, the aluminium content (e.g., amount) may be about 0.8 mol% to about 1.5 mol%, for example, about 0.8 mol% to about 1.4 mol%, about 0.8 mol% to about 1.3 mol%, or about 0.9 mol% to about 1.2 mol% based on 100 mol% of a total metal excluding lithium. The zirconium content (e.g., amount) may be about 0.1 mol% to about 0.3 mol%, for example, about 0.1 mol% to about 0.2 mol%, based on 100 mol% of a total metal excluding lithium.

As an example, the ratio (Al/Zr) of aluminium content (e.g., amount) to zirconium content (e.g., amount) in the lithium nickel-based composite oxide of the core particle may be greater than or equal to about 5, for example, about 5 to about 20, about 5 to about 15, or about 5 to about 10. Here, the ratio of the aluminium content (e.g., amount) to the zirconium content (e.g., amount) may be a molar ratio. If (e.g., when) the ratio of the aluminium content (e.g., amount) to the zirconium content (e.g., amount) satisfies or is within the above ranges, it may allow for a synthesis at a relatively low firing temperature without using, for example, an alkaline grain growth additive during the synthesis process and may have long cycle-life characteristics due to high structural stability.

In one or more embodiments, the lithium nickel-based composite oxide may be represented by Chemical Formula 11.

### Chemical Formula 11

Liₐ₁₁Niₓ₁₁M¹_{y11}Al_{z11}Zr_{w11}O_{2-b11}X_{b11}

In Chemical Formula 11, 0.9≤a11≤1.2, 0.6≤x11≤0.991, 0≤y11≤0.391, 0.008≤z11≤0.015, 0.001≤w11≤0.003, 0.9≤x11+y11+z11+w11≤1.1, and 0≤b11≤0.1, M¹ may be one or more elements selected from among B, Ba, Ca, Ce, Co, Cr, Cu, Fe, Mg, Mn, Mo, Nb, Si, Sn, Sr, Ti, V, W, Y, and Zn, and X may be one or more elements selected from among fluorine (F), phosphorus (P), and sulfur (S).

In Chemical Formula 11, 0.9≤a11≤1.1, 0.9≤a11≤1.05, or 0.9≤a11≤1. In one or more embodiments, 0.7≤x11≤0.991, and 0≤y11≤0.291, or 0.8≤x11≤0.991, and 0≤y11≤0.191, or 0.9≤x11≤0.991, and 0≤y11≤0.091. z11, which represents the Al content (e.g., amount), may be, for example, 0.008≤z11≤0.014, 0.008<z11<0.013, or 0.009≤z11≤0.012. w11, which represents the Zr content (e.g., amount), may be, for example, 0.001≤w11≤0.002.

In Chemical Formula 11, 5≤z11/w11, for example, 5≤z11/w11≤20, 5≤z11/w11≤15, or 5≤z11/w11≤10 may be satisfied.

For example, the lithium nickel-based composite oxide may be represented by Chemical Formula 12:

### Chemical Formula 12

Liₐ₁₂Niₓ₁₂Coᵥ₁₂M²_{y12}Al_{z12}Zr_{w12}O_{2-b12}X_{b12}

In Chemical Formula 12, 0.9≤a12≤1.2, 0.6≤x12<0.991, 0<v12≤0.391, 0≤y12≤0.391, 0.008≤z12≤0.015, 0.001≤w12≤0.003, 0.9≤x12+v12+y12+z12+w12≤1.1, and 0≤b12≤0.1, M² may be one or more elements selected from among B, Ba, Ca, Ce, Cr, Cu, Fe, Mg, Mn, Mo, Nb, Si, Sn, Sr, Ti, V, W, Y, and Zn, and X may be one or more elements selected from among F, P, and S.

In Chemical Formula 12, 5≤z12/w12, for example, 5≤z12/w12≤20, 5≤z12/w12≤15, or 5≤z12/w12≤10 may be satisfied.

In order to ensure structural stability and realize long cycle-life characteristics of the positive electrode active material, core particles may be in the form of single particles. Here, the single particles may exist alone without a grain boundary within the particle, may be composed of one particle, and may be a single particle, a monolith structure, a one body structure, or a non-agglomerated particle, in which particles are not agglomerated with each other but exist as an independent phase in terms of morphology, and may be represented as a single particle (e.g., one body particle or a single grain), for example, as a single crystal. The single particles may exist alone, or single particles may be agglomerated together. For example, two to nine single particles may be agglomerated and in contact with each other.

In one or more embodiments, the single particle may exist alone, or five or less single particles may be attached to each other (or agglomerated).

As an example, an average particle diameter (D₅₀) of the core particles may be about 1 µm to about 10 µm, for example, about 1 µm to about 8 µm, about 1 µm to about 4 µm, about 1.5 µm to about 4 µm, about 2 µm to about 4 µm, or about 2.5 µm to about 3.8 µm. Single particles satisfying the above particle size ranges may be structurally stable, may increase the energy density of the positive electrode, and improve or enhance the long cycle-life characteristics of a rechargeable lithium battery. Here, the average particle size may be obtained by measuring the particle size (e.g., particle diameter, major diameter, or major-axis length) of 20 random particles in a scanning electron microscope image, for example, to obtain the particle size distribution, and herein the size of the particle with a cumulative volume of 50 volume% (D₅₀) may have been calculated.

In order to secure excellent or suitable cycle-life characteristics by improving or enhancing the surface stability and ionic conductivity of the positive electrode active material, the positive electrode active material may include a coating layer.

The positive electrode active material may include a coating layer provided on the surface of the core particle and including cobalt and/or zirconium. By including a coating layer including cobalt and/or zirconium, the positive electrode active material may improve or enhance the structural stability of the core particles and effectively or suitably suppress or reduce side reactions with the electrolyte solution (e.g., a degree or occurrence of side reactions with the electrolyte solution may be suppressed or reduced), thereby improving or enhancing the cycle-life characteristics.

In one or more embodiments, the coating layer may be provided continuously (e.g., substantially continuously) on the surface of the core or may be provided in a discontinuous (e.g., substantially discontinuous) island shape.

As an example, the coating layer may further include nickel, manganese, and/or the like that flows in from the core in addition to cobalt and/or zirconium due to diffusion and/or the like during the preparing process. However, the coating layer may be a layer whose main or predominant components contain cobalt and/or zirconium in the largest quantities.

As an example, the thickness of the coating layer may be about 5 nm to about 500 nm, for example, about 10 nm to about 300 nm or about 50 nm to about 200 nm. Within the above ranges, the coating layer may achieve the effect of improving or enhancing cycle-life characteristics without acting as resistance (e.g., electrical resistance) and reducing capacity (e.g., electrical capacity).

In one or more embodiments, the cobalt content (e.g., amount) of the coating layer may be about 0.5 mol% to about 5 mol% based on 100 mol% of a total metal excluding lithium in the positive electrode active material. Within the above range, the coating layer may effectively implement the role of improving or enhancing cycle-life characteristics without acting as resistance (e.g., electrical resistance) and reducing capacity (e.g., electrical capacity).

As an example, the zirconium content (e.g., amount) of the coating layer may be about 0.1 mol% to about 3 mol% based on 100 mol% of a total metal excluding lithium in the positive electrode active material. Within the above range, the coating layer may not act as a resistance (e.g., electrical resistance) and may improve or enhance cycle-life characteristics without reducing capacity (e.g., electrical capacity).

In one or more embodiments, a ratio (W_{co}/W_{zr}) of the cobalt content (e.g., amount) (W_{co}) of the coating layer to the zirconium content (e.g., amount) (W_{zr}) of the coating layer may be about 1.1 to about 10, for example, about 2 to about 9 or about 5 to about 8. Within the above ranges, the effects of adding cobalt and zirconium to the coating layer may be harmonized with each other (e.g., synergized by each other) .

### Rechargeable Lithium Battery

The rechargeable lithium battery includes a positive electrode, a negative electrode, and/or an electrolyte, and the positive electrode includes a positive electrode active material prepared by the method according to one or more embodiments.

In one or more embodiments, the positive electrode may include a positive electrode current collector and a positive electrode active material layer that is on the positive electrode current collector and that includes the positive electrode active material prepared by the preparation method according to one or more embodiments.

In one or more embodiments, the rechargeable lithium battery may include a separator between the positive electrode and the negative electrode.

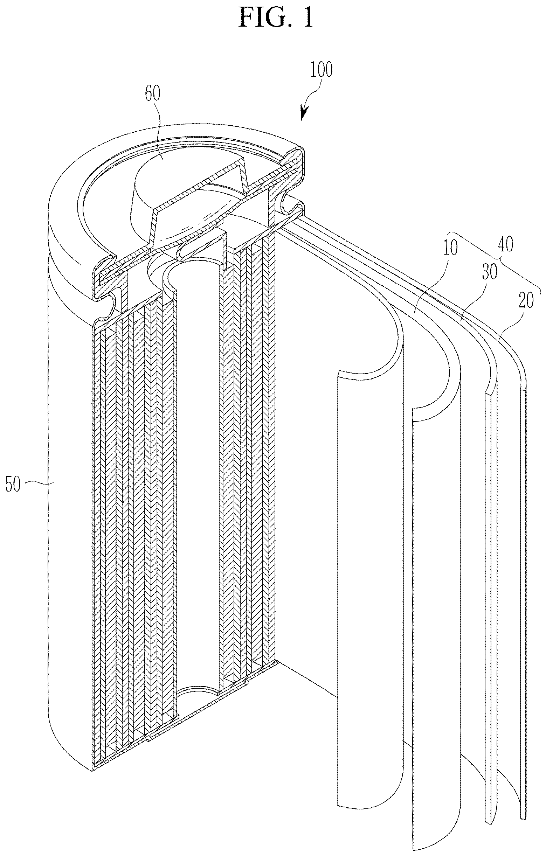

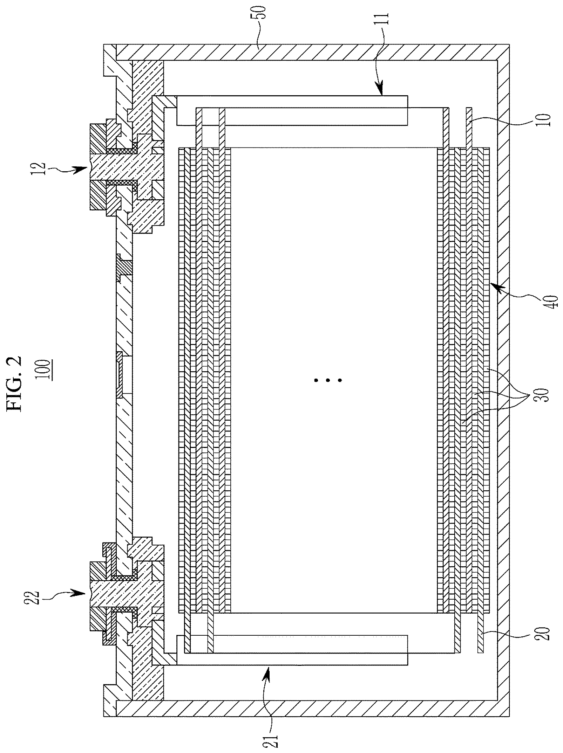

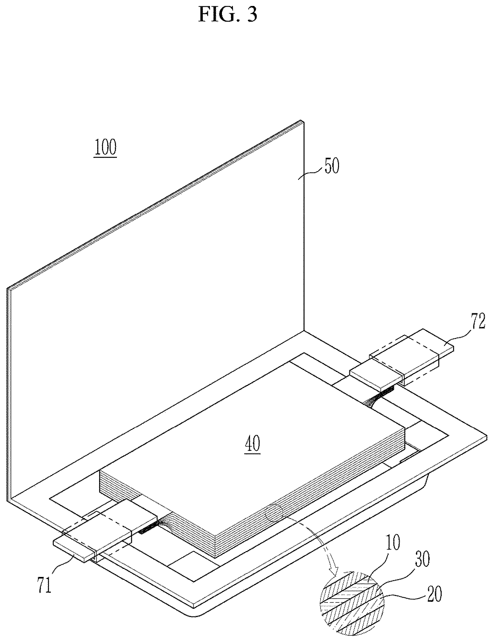

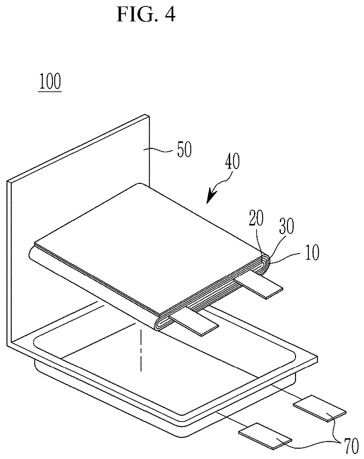

The rechargeable lithium battery may be classified into cylindrical, prismatic, pouch, coin, and/or the like depending on the shape. FIGS. 1-4 each is a schematic view illustrating the rechargeable lithium battery according to one or more embodiments, where FIG. 1 is a cylindrical battery, FIG. 2 is a prismatic battery, and FIGS. 3 and 4 each is a pouch-shaped battery. Referring to FIGS. 1-4, the rechargeable lithium battery 100 may include an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12, a negative lead tab 21, and/or a negative electrode terminal 22. As shown in FIGS. 3 and 4, the rechargeable lithium battery 100 may include an electrode tab 70, for example, a positive electrode tab 71 and a negative electrode tab 72 serving as an electrical path for inducing the current provided in the electrode assembly 40 to the outside.

### Positive Electrode

The positive electrode may include a positive electrode current collector and a positive electrode active material layer on the positive electrode current collector. In addition to the positive electrode active material according to one or more embodiments, the positive electrode active material layer may further include a binder, a conductive material, and/or a combination thereof.

### Positive Electrode Active Material

The positive electrode active material may be a compound (e.g., a lithiated intercalation compound) capable of reversibly intercalating and deintercallating lithium, and the positive electrode active material according to one or more embodiments in relation to the method of preparing the positive electrode active material may be utilized.

### Binder

The binder may improve or enhance binding properties of positive electrode active material particles with one another and with a current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but are not limited thereto.

### Conductive Material

The conductive material may be included to provide electrode conductivity, and any suitable electrically conductive material may be used as a conductive material unless it causes a chemical change (e.g., an undesirable chemical change to the rechargeable lithium battery). Examples of the conductive (e.g., electrically conductive) material may include a carbon-based material, such as natural graphite, artificial graphite, carbon black, acetylene black, ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as polyphenylene and/or a derivative thereof; and/or a mixture thereof.

Each content (e.g., amount) of the binder and the conductive material may be about 0.5 wt% to about 5 wt% based on 100 wt% of the positive electrode active material layer.

The positive electrode current collector may include aluminium (Al), but is not limited thereto.

### Negative Electrode

The negative electrode may include a negative electrode current collector and a negative electrode active material layer on the negative electrode current collector, wherein the negative electrode active material layer may include a negative electrode active material and may further include a binder, a conductive material, and/or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous (e.g., non-crystalline) carbon, and/or a combination thereof as a carbon-based negative electrode active material. The crystalline carbon may be irregular (e.g., substantially irregular), and/or sheet (e.g., substantially sheet), flake (e.g., substantially flake), spherical (e.g., substantially spherical), and/or fiber (e.g., substantially fiber) shaped natural graphite and/or artificial graphite. The amorphous (e.g., non-crystalline) carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material and/or a Sn-based negative electrode active material. The Si-based negative electrode active material may include silicon, a silicon-carbon composite, SiOₓ (0<x≤2), a Si-Q alloy (wherein Q may be an element selected from among an alkali metal, an alkaline-earth metal, a Group 13 element, a Group 14 element (excluding Si), a Group 15 element, a Group 16 element, a transition metal, a rare earth element, and/or a combination thereof, for example, Mg, Ca, Sr, Ba, Ra, scandium (Sc), yttrium (Y), Ti, zirconium (Zr), hafnium (Hf), rutherfordium (Rf), V, Nb, tantalum (Ta), dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, thallium (TI), Ge, P, arsenic (As), Sb, bismuth (Bi), S, selenium (Se), tellurium (Te), polonium (Po), and a combination thereof), or a combination thereof. The Sn-based negative electrode active material may be Sn, SnOₖ (0<k≤2) (e.g., SnO₂), a Sn alloy, or a combination thereof.

The silicon-carbon composite may be a composite of silicon and amorphous (e.g., non-crystalline) carbon. An average particle diameter (D₅₀) of the silicon-carbon composite particles may be, for example, about 0.5 µm to about 20 µm. According to one or more embodiments, the silicon-carbon composite may be in the form of silicon particles and/or amorphous (e.g., non-crystalline) carbon coated on the surface of the silicon particles. For example, it may include a secondary particle (core) in which silicon primary particles are assembled and/or an amorphous (e.g., non-crystalline) carbon coating layer (shell) on the surface of the secondary particle. The amorphous (e.g., non-crystalline) carbon may also be provided between the silicon primary particles, for example, the silicon primary particles may be coated with amorphous (e.g., non-crystalline) carbon. The secondary particles may be provided (e.g., as being dispersed) in an amorphous (e.g., non-crystalline) carbon matrix.

The silicon-carbon composite may further include crystalline carbon. For example, the silicon-carbon composite may include a core including crystalline carbon and/or silicon particles and/or an amorphous (e.g., non-crystalline) carbon coating layer on the surface of the core. The crystalline carbon may be artificial graphite, natural graphite, or a combination thereof. The amorphous (e.g., non-crystalline) carbon may include soft carbon, hard carbon, a mesophase pitch carbonized product, and/or calcined coke.

If (e.g., when) the silicon-carbon composite includes silicon and amorphous (e.g., non-crystalline) carbon, a content (e.g., amount) of silicon may be about 10 wt% to about 50 wt% and a content (e.g., amount) of amorphous (e.g., non-crystalline) carbon may be about 50 wt% to about 90 wt% based on 100 wt% of the silicon-carbon composite. In one or more embodiments, if (e.g., when) the composite includes silicon, amorphous (e.g., non-crystalline) carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous (e.g., non-crystalline) carbon may be about 20 wt% to about 40 wt% based on 100 wt% of the silicon-carbon composite.

In one or more embodiments, a thickness of the amorphous (e.g., non-crystalline) carbon coating layer may be about 5 nm to about 100 nm. An average particle diameter (D₅₀) of the silicon particles (e.g., primary particles) may be about 10 nm to about 1 µm or about 10 nm to about 200 nm. The silicon particles may exist as silicon alone, in the form of a silicon alloy, or in an oxidized form. The oxidized form of silicon may be represented by SiOₓ (0<x≤2). At this time, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a particle where an accumulated volume is about 50 volume% in a particle distribution.

The Si-based negative electrode active material and/or Sn-based negative electrode active material may be mixed with the carbon-based negative electrode active material. If (e.g., when) the Si-based negative electrode active material or Sn-based negative electrode active material and the carbon-based negative electrode active material are mixed and used, the mixing ratio may be a weight ratio of about 1:99 to about 90:10.

### Binder

The binder may serve to well or suitably adhere the negative electrode active material particles to each other and/or to well or suitably adhere the negative electrode active material to the current collector. The binder may be a non-aqueous (e.g., water-insoluble) binder, an aqueous (e.g., water-soluble) binder, a dry binder, or a combination thereof.

The non-aqueous (e.g., water-insoluble) binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a combination thereof.

The aqueous (e.g., water-soluble) binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and/or a combination thereof.

If (e.g., when) an aqueous (e.g., water-soluble) binder is used as the negative electrode binder, a cellulose-based compound capable of imparting viscosity may be further included. As the cellulose-based compound, one or more selected from among carboxymethyl cellulose, hydroxypropyl methylcellulose, methyl cellulose, or alkali metal salts thereof may be mixed and used. The alkali metal may be Na, K, or Li.

The dry binder may be a polymer material capable of becoming or being manufactured into fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material may be included to provide electrode conductivity, and any suitable electrically conductive material may be used as a conductive material unless it causes a chemical change (e.g., an undesirable chemical change to the rechargeable lithium battery). Examples of the conductive (e.g., electrically conductive) material may include a carbon-based material, such as natural graphite, artificial graphite, carbon black, acetylene black, ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as polyphenylene and/or a derivative thereof; and/or a mixture thereof.

An amount of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and/or about 0.5 wt% to about 5 wt% of the conductive (e.g., electrically conductive) material.

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte solution, which may include a non-aqueous (e.g., water-insoluble) organic solvent and/or a lithium salt.

The non-aqueous (e.g., water-insoluble) organic solvent may serve as a medium to transmit ions taking part in the electrochemical reaction of a rechargeable lithium battery. The non-aqueous (e.g., water-insoluble) organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R may be a C2 to C20 linear, branched, or cyclic hydrocarbon group, a double bond, an aromatic ring, or an ether group, and/or the like); amides, such as dimethylformamide and/or the like; dioxolanes, such as 1,3-dioxolane, 1,4-dioxolane, and/or the like; sulfolanes, and/or the like.

The non-aqueous (e.g., water-insoluble) organic solvent may be used alone or in a mixture of two or more kinds or types, and if (e.g., when) two or more kinds or types are used in a mixture, a mixing ratio may be appropriately or suitably adjusted according to the desired or suitable battery performance, which is generally available to those working in the field.

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The non-aqueous (e.g., water-insoluble) organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinyl ethylene carbonate, vinylene carbonate, and/or an ethylene carbonate-based compound to improve or enhance cycle-life of a rechargeable lithium battery.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and/or cyanoethylene carbonate.

The lithium salt dissolved in the organic solvent may supply or provide lithium ions in a rechargeable lithium battery, enable a basic operation of a rechargeable lithium battery, and improve or enhance transportation of the lithium ions between the positive electrode and the negative electrode. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y may be integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. If (e.g., when) the concentration of lithium salt is within the above range, the electrolyte solution may have appropriate or suitable ionic conductivity and viscosity, and thus excellent or suitable performance may be achieved and lithium ions may move effectively or suitably.

### Separator

Depending on the kind or type of the rechargeable lithium battery, a separator may be present between the positive electrode and the negative electrode. The separator may include polyethylene, polypropylene, polyvinylidene fluoride, and/or a multilayer film of two or more layers thereof, and/or a mixed multilayer film, such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one surface or both surfaces (e.g., two opposing surfaces) of the porous substrate.

The porous substrate may be a polymer film of any one polymer selected from among polyolefin, such as polyethylene and polypropylene, polyester, such as polyethylene terephthalate and polybutylene terephthalate, polyacetal, polyamide, polyimide, polycarbonate, polyether ketone, polyaryletherketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (Teflon^{™}), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide and/or a second structural unit including at least one selected from among a structural unit derived from (meth)acrylic acid or (meth)acrylate, and a structural unit derived from (meth)acrylamido sulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be about 1 nm to about 2000 nm, for example, about 100 nm to about 1000 nm or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm or about 1 µm to about 5 µm.

Examples and Comparative Examples of the present disclosure are described below. However, the following examples are only examples of the present disclosure, and embodiments of the present disclosure are not limited to the following examples.

### Example 1

### 1. Preparation of Positive Electrode Active Material

### (1) Preparation of Nickel-based Composite Hydroxide

Nickel-based composite hydroxides were prepared through the following co-precipitation method. A mixed solution of metal raw materials was prepared by dissolving nickel sulfate, cobalt sulfate, and manganese sulfate in distilled water as a solvent so that the molar ratio of Ni:Co:Mn = 95:4:1. A diluted ammonia water (NH₄OH) solution was prepared as a complex agent and sodium hydroxide (NaOH) as a pH adjuster. A concentration of ammonia water was 10 wt%, and a concentration of sodium hydroxide was 20 wt%. The prepared metal raw material mixture solution, ammonia water, and sodium hydroxide were each injected into a reactor.

After setting pH inside the reactor at 11.75, the resultant mixture was stirred for 10 hours (first step) and after lowering pH to 11.55, stirred for 22 hours (second step), thereby causing a difference in the synthesis speed between inside and outside of particles to synthesize a nickel-based composite hydroxide.

The resultant slurry solution in the reactor was filtered, washed with distilled water having high purity, and dried in a hot air oven at 180 °C for 24 hours to obtain the nickel-based composite hydroxide (Ni_{0.95}Co_{0.04}Mn_{0.01}(OH)₂). The obtained nickel-based composite hydroxide was in the form of secondary particles provided by agglomeration of a plurality of primary particles, wherein the secondary particles had an average particle diameter (D₅₀) of about 13.2 µm, when measured utilizing an SEM image.

### (2) Preparation of Positive Electrode Active Material

The obtained nickel-based composite hydroxide was mixed with an anhydrous lithium hydroxide, Al₂O₃, and ZrO₂. Herein, the anhydrous lithium salt was mixed so that lithium had a molar ratio of 1.05 to 1 part by mole of total metal of the nickel-based composite hydroxide, Al of Al₂O₃, and Zr of ZrO₂. Also, Al₂O₃ was added, so that Al of Al₂O₃ became 1 mol% based on 100 mol% of the total metal of the nickel-based composite hydroxide, Al of Al₂O₃, and Zr of ZrO₂, and ZrO₂ was added, so that Zr of ZrO₂ became 0.1 mol% based on 100 mol% of the total metal of the nickel-based composite hydroxide, Al of Al₂O₃, and Zr of ZrO₂.

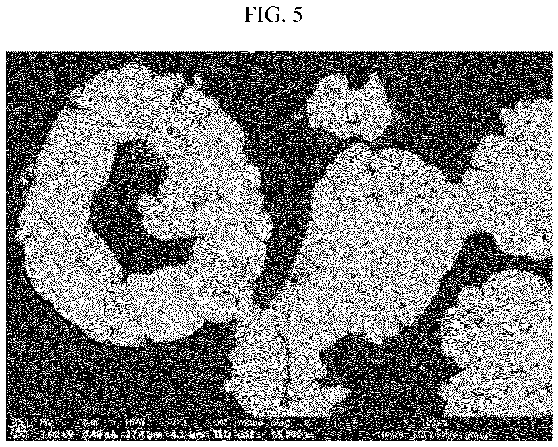

The resultant mixture was heat-treated at 810 °C for 8 hours under an atmosphere including 90 volume% of oxygen. A product obtained from the first heat treatment had a composition of Li_{1.00}Ni_{0.939}Co_{0.04}Mn_{0.01}Al_{0.01}Zr_{0.001}O₂ and when examined utilizing an SEM image, was confirmed to have a hollow secondary particle shape. FIG. 5 is a SEM image of a cross-section of the secondary particle.

When measured utilizing the SEM image, the secondary particles had an average particle diameter (D₅₀) of about 13.5 µm, while the primary particles forming the secondary particles had an average particle diameter (D₅₀) of about 2.7 µm, and the secondary particles had an internal pore size of about 4 µm.

The product obtained from the first heat treatment was pulverized for 20 minutes by using a jet mill at an air pressure of about 5 bars, and when examined utilizing an SEM image, the pulverized resultant was confirmed to be single particles having an average particle diameter of about 2.7 µm.

The pulverized resultant was washed by adding to a distilled water solvent and coated with cobalt and zirconium by adding Co(OH)₂ and Zr(OH)₂ and mixing them. Subsequently, after removing the distilled water, the coated product was dried at 190 °C and secondarily heat-treated at 720 °C for 16 hours under an atmosphere including 90 volume% of oxygen to obtain a positive electrode active material. Herein, based on 100 mol% of the total metal of the nickel-based composite hydroxide, aluminium of the aluminium raw material, zirconium of the zirconium raw material, cobalt of the cobalt coating raw material, and zirconium of the zirconium coating raw material, a cobalt content (e.g., amount) in the cobalt coating raw material was designed to be 2 mol%, and a zirconium content (e.g., amount) in the zirconium coating raw material was designed to be 0.3 mol%.

As a result of examining the obtained positive electrode active material through scanning electron microscopy/energy-dispersive X-ray spectrometry (SEM-EDS), each Co and Zr-containing coating layer was sequentially provided on the surface of the single particles as a core. Also, an SEM image of a cross-section of the manufactured hollow secondary particles is shown in FIG. 5.

### 2. Manufacturing of Rechargeable Lithium Battery Cell

98.5 wt% of the manufactured positive electrode active material, 1.0 wt% of a polyvinylidene fluoride binder, and 0.5 wt% of a carbon nanotube conductive material were mixed to prepare a positive electrode active material layer slurry, and this positive electrode active material layer slurry was coated on an aluminium foil current collector to manufacture a positive electrode. The manufactured positive electrode contained the positive electrode active material in the form of pulverized single particles.

The positive electrode, a lithium counter electrode as a negative electrode, and a polytetrafluoroethylene separator provided therebetween were used to manufacture a structure, and after inserting the structure in a battery case, an electrolyte solution prepared by mixing ethylene carbonate and dimethyl carbonate in a volume ratio of 3:7 and dissolving 1 M LiPF₆ in the mixed solvent was injected thereinto to manufacture a rechargeable lithium battery half-cell utilizing a general method.

### Example 2

A positive electrode active material and a rechargeable lithium battery cell were manufactured in substantially the same manner as in Example 1 except that the positive electrode active material was prepared by mixing ZrO₂, so that Zr became 0.2 mol% based on 100 mol% of total metal of the nickel-based composite hydroxide, aluminium of the aluminium raw material, and zirconium of the zirconium raw material and then, performing the first heat treatment.

### Comparative Example 1

A positive electrode active material and a rechargeable lithium battery cell were manufactured in substantially the same manner as in Example 1 except that the positive electrode active material was prepared by performing the first heat treatment without mixing ZrO₂. In Comparative Example 1, because the primary particles forming the secondary particles were not single-crystallized to a sufficient size at the heat treatment of 810 °C, the secondary particles were not pulverized through the jet-milling process. Accordingly, comparing Example 1 and Example 2, when Al₂O₃ and ZrO₂ in each set or predetermined content (e.g., amount) were added in the first heat treatment under substantially the same temperature condition to proceed with Al and Zr doping, grain growth of core particles, for example, growth of the primary particles or singe crystallization of the primary particles were promoted.

### Comparative Example 2

A positive electrode active material and a rechargeable lithium battery cell were manufactured in substantially the same manner as in Example 1 except that the positive electrode active material was prepared by mixing Al₂O₃ and ZrO₂, so that Al of Al₂O₃ became 1 mol% and Zr became 0.3 mol% based on 100 mol% of the total metal of the nickel-based composite hydroxide, Al of Al₂O₃, and Zr of ZrO₂ and then, performing the first heat treatment. Comparative Example 2 had an Al/Zr ratio of 3.33, which was less than 5. Comparative Example 2 was confirmed to exhibit overgrowth of primary particles during the process of forming the core particles and thus reduction of initial charge and discharge capacity and efficiency and cycle-life characteristics.

### Comparative Example 3

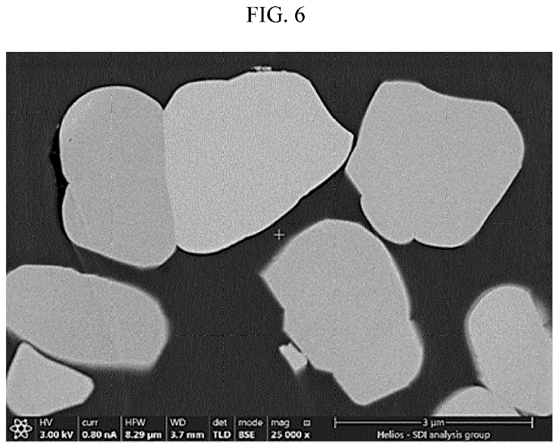

A positive electrode active material and a rechargeable lithium battery cell were manufactured in substantially the same manner as in Example 1 except that a nickel-based composite hydroxide was prepared in the form of secondary particles with an average particle diameter (D₅₀) of about 3 µm, which were small particles, as a result of the first heat treatment by increasing the pH condition to 12.3 without changing pH and stirring for 35 hours instead of the 2 step co-precipitation reaction performed by setting pH inside the reactor to 11.75 and stirring for 10 hours (first step) and then, lowering pH to 11.55 and stirring for 22 hours (second step). Herein, a SEM image of a cross-section of the secondary particles, small particles, is shown in FIG. 6.

### Comparative Example 4

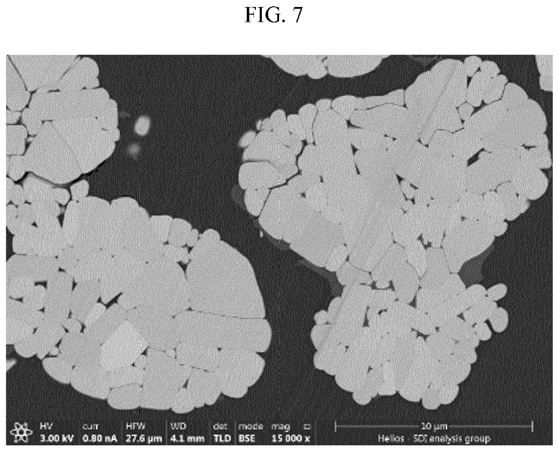

A positive electrode active material and a rechargeable lithium battery cell were manufactured in substantially the same manner as in Example 1 except that a nickel-based composite hydroxide was prepared in the form of secondary particles having an average particle diameter (D₅₀) of about 15 µm, which were large particles, as a result of the first heat treatment by increasing the pH condition to 12.75 without changing pH and stirring for 35 hours instead of the 2 step co-precipitation reaction performed by setting pH inside the reactor to 11.75 and stirring for 10 hours (first step) and then, lowering pH to 11.55 and stirring for 22 hours (second step). Herein, a SEM image of a cross-section of the secondary particles, large particles, is shown in FIG. 7.

### Evaluation Example 1: Evaluation of Cycle-life Characteristics

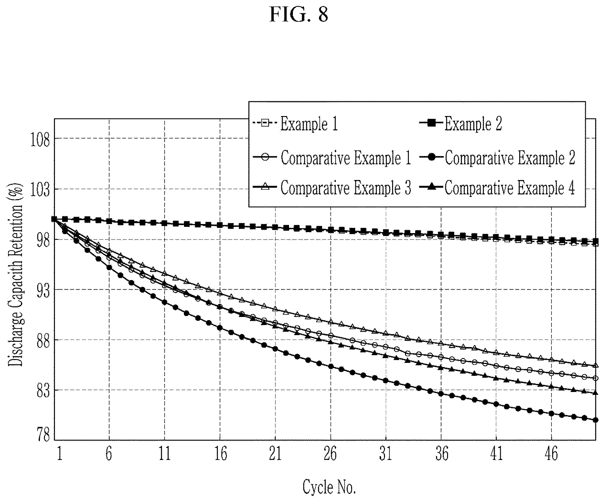

The rechargeable lithium battery cells according to Examples 1 and 2 and Comparative Examples 1 to 4 were charged to 4.45 V to a constant current of 0.2 C and to 0.05 C at the constant voltage and then, discharged to 3.0 V at 0.2 C at 25 °C to proceed with initial charge and discharge. Subsequently, the cells were 50 times repeatedly charged and discharged at 1.0 C within a voltage range of 3.0 V to 4.45 V at 45 °C. A ratio of discharge capacity to the initial discharge capacity (i.e. capacity retention rate) at each cycle is shown in FIG. 8.

Referring to FIG. 8, Comparative Examples 1 to 4 exhibited a decrease in capacity retention as the cycles proceeded.

On the contrary, Examples 1 and 2 were confirmed to realize excellent or suitable cycle-life characteristics.

### Evaluation Example 2: Evaluation of Loading Amount and Top and Bottom Physical Properties

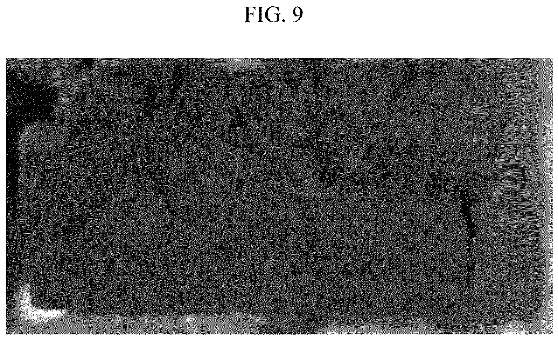

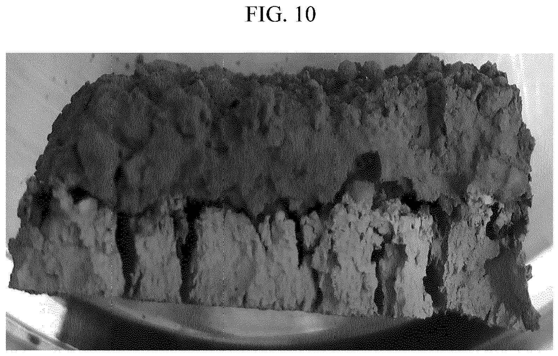

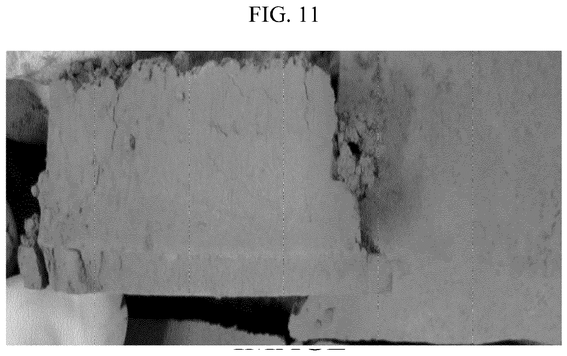

Example 1 and Comparative Examples 3 and 4 were subjected to a loading amount test to evaluate a loading amount of a firing input for preparing positive electrode active materials, and the results are shown in Table 1. The loading amount test result of the positive electrode active material of Example 1 is shown in FIG. 9, the loading amount test result of the positive electrode active material of Comparative Example 3 is shown in FIG. 10, and the loading amount test result of the positive electrode active material of Comparative Example 4 is shown in FIG. 11. In addition, X-ray diffraction (XRD) analysis was performed on Example 1, Comparative Example 3, and Comparative Example 4, and the results are also shown in Table 1.

**Table 1**

| | | Loading amount (kg) | 003 FWHM | 003 /104 Area | 003 /104 FWHM | Remarks |
|---|---|---|---|---|---|---|
| Com parati ve Exam ple 3 | Top when using small particles precursor | 15 | 0.115 | 1.18 | 0.86 | Inferior physical properties at the bottom |
| | Bottom when using small particles precursor | | 0.148 | 1.08 | 0.67 | |
| Com parati ve Exam ple 4 | Top when using large particles precursor | 20 | 0.119 | 1.36 | 0.92 | Excellent physical properties, but difficult to pulverize the primary particles |
| | Bottom when using large particles precursor | | 0.120 | 1.37 | 0.92 | |
| Exam ple 1 | Top when using a large particle hollow precursor | 20 | 0.110 | 1.03 | 0.76 | Excellent physical properties |
| | Bottom when using large particle hollow precursor | | 0.114 | 1.00 | 0.74 | |

Referring to Table 1 and FIGS. 9-11, Example 1, which used a large particle precursor in the preparation process, exhibited no top and bottom separation as well as a high loading amount and a little agglomeration, obtaining a uniform positive electrode active material layer having a little difference in X-ray diffraction (XRD) properties between the top and the bottom.

On the contrary, Comparative Example 3, which used a small particle precursor, exhibited top and bottom separation and large agglomeration of single particles and thus a difference in XRD properties in the top and the bottom.

Comparative Example 4, which used a large particle precursor in the preparation process, exhibited no top and bottom separation and a little agglomeration and thus a little difference in XRD properties in the top and the bottom but compared with Example 1, had no internal hollow space, which made the primary particles have more contact surfaces and thereby, made it difficult to pulverize the primary particles.

### Evaluation Example 3: Evaluation of Charge and Discharge Efficiency

After the initial charge and discharge as in Evaluation Example 1, the rechargeable lithium battery cells of Example 1 and Comparative Examples 3 and 4 were subsequently 50 times charged and discharged at 1.0 C within a voltage range of 3.0 V to 4.45 V at 45 °C to measure charge capacity and discharge capacity and then, calculate a ratio of the latter to the former as efficiency, and the results are shown in Table 2.

**Table 2**

| | Comparative Example 3 | Comparative Example 4 | Example 1 |
|---|---|---|---|
| Charge capacity (mAh/g) | 235.1 | 235.8 | 235.8 |
| Discharge capacity (mAh/g) | 201.6 | 204.5 | 205.0 |
| Charge and discharge efficiency (%) | 85.8 | 86.7 | 86.9 |

Referring to Table 2, the case of using the positive electrode active material prepared by using a large particle hollow precursor according to Example 1 exhibited excellent or suitable charge capacity and discharge capacity and the most excellent or suitable charge/discharge efficiency.

On the other hand, the case of using the positive electrode active material prepared by using a small particle precursor according to Comparative Example 3 exhibited insufficient or unsuitable charge and discharge efficiency as well as slightly low charge capacity and discharge capacity. In one or more embodiments, the case of using the positive electrode active material prepared by using a large particle precursor according to Comparative Example 4 exhibited charge capacity at substantially the same level but slightly lower discharge capacity and charge/discharge efficiency than Example 1.

While the subject matter of the present disclosure has been described in connection with what is presently considered to be practical example embodiments, it is to be understood that the present disclosure is not limited to the disclosed embodiments. In one or more embodiments, it is intended to cover one or more suitable modifications and equivalent arrangements included within the scope of the appended claims and equivalents thereof. It therefore will be understood that one or more embodiments described above are just illustrative but not limitative in all aspects.

**Description of Reference Numerals**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A method of preparing a positive electrode active material, comprising:
performing a co-precipitation reaction comprising a first step of reacting at a pH range of about pH 11 to about pH 12 and a second step of reacting at a pH lower than the first step for a mixture of a nickel precursor and a metal precursor to obtain a nickel-based composite hydroxide having an average particle diameter of about 10 µm to about 20 µm,
mixing the nickel-based composite hydroxide, an anhydrous lithium hydroxide, an aluminium raw material, and a zirconium raw material and subjecting to a first heat treatment to produce hollow secondary particles comprising layered lithium nickel-based composite oxide and having pores inside as secondary particles made by agglomerating a plurality of primary particles,
pulverizing the secondary particles, and
adding and mixing the pulverized resultant, a cobalt coating raw material, and a zirconium coating raw material into an aqueous solvent, and then performing a second heat treatment to obtain a positive electrode active material.

2. The method as claimed in claim 1, wherein:
a metal of the metal precursor is B, Ba, Ca, Ce, Co, Cr, Cu, Fe, Mg, Mn, Mo, Nb, Si, Sn, Sr, Ti, V, W, Y, Zn, or a combination thereof.

3. The method as claimed in claim 1 or claim 2, wherein:
an aluminium content of the aluminium raw material is about 0.8 mol% to about 1.5 mol% and a zirconium content of the zirconium raw material is about 0.1 mol% to about 0.3 mol% based on 100 mol% of a total metal of the nickel-based composite hydroxide, aluminium of the aluminium raw material, and zirconium of the zirconium raw material, and a ratio (Al/Zr) of the aluminium content to the zirconium content is greater than or equal to about 5.

4. The method as claimed in any preceding claim, wherein:
the nickel-based composite hydroxide is in an amorphous state.

5. The method as claimed in any preceding claim, wherein:
the aluminium raw material is aluminium oxide, and
the zirconium raw material is zirconium oxide.

6. The method as claimed in any preceding claim, wherein:
based on 100 mol% of a total metal of the nickel-based composite hydroxide, aluminium of the aluminium raw material, zirconium of the zirconium raw material, cobalt of the cobalt coating raw material, and zirconium of the zirconium coating raw material, a cobalt content of the cobalt coating raw material is adjusted to be about 0.5 mol% to about 5 mol% and a zirconium content of the zirconium coating raw material is adjusted to be about 0.1 mol% to about 3 mol%.

7. The method as claimed in any preceding claim, wherein:
the first heat treatment is performed at about 700 °C to about 900 °C for about 4 hours to about 20 hours in an oxidizing gas atmosphere, and
the second heat treatment is performed at about 500 °C to about 900 °C for about 10 hours to about 20 hours in an oxidizing gas atmosphere.

8. The method as claimed in any preceding claim, wherein:
the nickel-based composite hydroxide is represented by Chemical Formula 1:
Chemical Formula 1 Niₓ₁M¹_{y1}(OH)₂
wherein, in Chemical Formula 1, 0.6≤x1≤1, 0≤y1≤0.4, 0.9≤x1+y1≤1.1, and M¹ is one or more elements selected from among B, Ba, Ca, Ce, Co, Cr, Cu, Fe, Mg, Mn, Mo, Nb, Si, Sn, Sr, Ti, V, W, Y, and Zn.

9. The method as claimed in any preceding claim, wherein:
in the nickel-based composite hydroxide, based on 100 mol% of a total metal excluding lithium, a nickel content is about 80 mol% to about 99 mol%.

10. The method as claimed in any preceding claim, wherein:
an average particle diameter of the secondary particles is about 10 µm to about 20 µm,
an average particle diameter of the plurality of primary particles constituting the secondary particles is about 1 µm to about 4 µm, and
an average size of the pores inside the secondary particles is about 1 µm to about 9 µm.

11. The method as claimed in any preceding claim, wherein:
the positive electrode active material comprises
core particles comprising layered lithium nickel-based composite oxide and in a form of single particles; and
a coating layer on the surface of the core particles, wherein the coating layer comprises cobalt and zirconium.

12. The method as claimed in claim 11, wherein:
a cobalt content of the coating layer is about 0.5 mol% to about 5 mol% based on 100 mol% of a total metal excluding lithium in the positive electrode active material, and
a zirconium content of the coating layer is about 0.1 mol% to about 3 mol% based on 100 mol% of a total metal excluding lithium in the positive electrode active material, optionally wherein:
the lithium nickel-based composite oxide of the core particles comprises aluminium and zirconium and has a nickel content of greater than or equal to about 60 mol%, an aluminium content of about 0.8 mol% to about 1.5 mol%, and a zirconium content of about 0.1 mol% to about 0.3 mol% based on 100 mol% of a total metal excluding lithium and a ratio (Al/Zr) of the aluminium content to the zirconium content of greater than or equal to about 5.

13. The method as claimed in claim 11 or claim 12, wherein:
the lithium nickel-based composite oxide is represented by Chemical Formula 11:
Chemical Formula 11 Liₐ₁₁Niₓ₁₁M¹_{y11}Al_{z11}Zr_{w11}O_{2-b11}X_{b11}
wherein, in Chemical Formula 11, 0.9≤a11≤1.2, 0.6≤x11≤0.991, 0≤y11≤0.391, 0.008≤z11≤0.015, 0.001≤w11≤0.003, 0.9≤x11+y11+z11+w11≤1.1, and 0≤b11≤0.1, M¹ is one or more elements selected from among B, Ba, Ca, Ce, Co, Cr, Cu, Fe, Mg, Mn, Mo, Nb, Si, Sn, Sr, Ti, V, W, Y, and Zn, and X is one or more elements selected from among F, P, and S.

14. The method as claimed in any one of claims 11 to 13, wherein:
an average particle diameter of the core particles is about 1 µm to about 4 µm,
and
a thickness of the coating layer is about 5 nm to about 500 nm.

15. A rechargeable lithium battery, comprising:
a positive electrode comprising a positive electrode active material prepared by the method as claimed in any one of claims 1 to 14;
a negative electrode; and
an electrolyte.
